# EUROPEAN PATENT APPLICATION

(11) **EP 4 342 613 A1**
(43) Date of publication of application: **27.03.2024**
(21) Application number: 23187772.1
(22) Date of filing: 26.07.2023
(51) Int. Cl.: B23H 1/10

(54) **ELECTRIC DISCHARGE MACHINE AND ELECTRIC DISCHARGE MACHINING METHOD**

(30) Priority: 08.09.2022 JP 2022142980
(71) Applicant: Sodick Co., Ltd., Kanagawa 224-8522 (JP)
(72) Inventor: Inoue, Hirotoshi, Kanagawa, 224-8522 (JP); Dohi, Yuzo, Kanagawa, 224-8522 (JP)
(74) Representative: Becker, Eberhard

(57) **Abstract**

An electric discharge machine and an electric discharge machining method thereof are provided. The electric discharge machine includes a circulation pump (7) for pressure-feeding a work fluid (F) in a dirty fluid tank (3) to a filter (71); a jetting pump (5) for pressure-feeding the work fluid in the clean fluid tank (4) to a jetting nozzle (51); a feeding pump (6) for pressure-feeding the work fluid in the clean fluid tank to the work tank (2); and a pump controller (8) for inverter-controlling the circulation pump, the jetting pump, and the feeding pump. The pump controller includes a jetting pump controller (85) configured to set an inverter frequency of the jetting pump, and a feeding pump controller (86) configured to acquire the flow rate of the inverter-controlled jetting pump and set an inverter frequency of the feeding pump based on the flow rate of the inverter-controlled jetting pump.

## Description

### BACKGROUND

### Technical Field

This disclosure relates to an electric discharge machine and an electric discharge machining method.

### Related Art

In an electric discharge machine, a workpiece is accommodated in a work tank. The workpiece is arranged opposite to a machining electrode (hereinafter simply referred to as an electrode). A small gap is formed between the workpiece and the electrode. The electric discharge machine applies a machining voltage to a gap to generate a discharge in the gap while relatively moving the electrode and the workpiece, and machines the workpiece into a desired shape using an electronic discharge energy. The electric discharge machine is equipped with a service tank including a clean fluid tank for storing clean work fluid and a dirty fluid tank for storing dirty work fluid.

The electric discharge machine is configured to be able to jet the work fluid from a jetting nozzle toward the gap during machining. In a wire electric discharge machine, which is a type of electric discharge machine, the work fluid may be jetted toward the gap coaxially with the wire electrode, which is an electrode, from a pair of jetting nozzles provided above and below the workpiece during machining. The work fluid supplied to the gap by the jetting nozzle efficiently and effectively restores the insulation of the gap, cools the gap, and removes machining chips from the gap. When machining is performed by immersing the workpiece in the work fluid, clean work fluid is supplied from the clean fluid tank to the work tank, and during machining, the work tank is filled with the work fluid. In this manner, clean work fluid is supplied to the work tank through the jetting nozzle or directly during machining, while dirty work fluid is discharged from the work tank to the dirty fluid tank.

The feeding pump supplies clean work fluid from the clean fluid tank to the work tank. The feeding pump may supply the work fluid to devices such as a cooler and a deionizer, adjust the work fluid to a desired state, and return it to the clean fluid tank. The jetting pump supplies clean work fluid from the clean fluid tank to the jetting nozzle. The circulation pump supplies dirty work fluid stored in the dirty fluid tank to a filter. The filter removes machining chips and sludge from the work fluid and discharges it into the clean fluid tank.

Japanese Patent Laid-Open No. H04-176517 A discloses a work fluid filtration device in which a pump that supplies work fluid to a filter is controlled by an inverter.

### SUMMARY

### Technical Problem

In recent years, proactive efforts for energy conservation have been made as part of the Sustainable Development Goals (SDGs). In order to achieve energy conservation in electric discharge machines, it is conceivable to control the pump using an inverter.

As mentioned earlier, electric discharge machines are equipped with three types of pumps: a feeding pump, aj etting pump, and a circulation pump. The jetting pump directly affects machining performance by supplying work fluid to the jetting nozzle. By controlling the inverter in the jetting pump, it is possible to set the jetting pressure and a flow rate suitable for machining. On the other hand, if each pump is individually controlled by an inverter, there is a risk of adverse effects on electric discharge machining. For example, if the flow rate of the feeding pump is reduced when the flow rate of the jetting pump is low, the liquid level in the work tank may fall below the lower limit. If there is insufficient work fluid in the work tank, there is a possibility of adverse effects on the quality of machining. Also, if the flow rate of the circulation pump falls below the sum of the flow rate of the feeding pump and the flow rate of the jetting pump, the liquid level in the clean fluid tank may fall below the lower limit. If there is insufficient work fluid in the clean fluid tank, there is a risk of errors causing stoppage or pump failure. Thus, conventionally, it was common that while the jetting pump was inverter-controlled and the feeding pump and circulation pump was fixed at utility frequency. In this case, the feeding pump and circulation pump operate with more energy than necessary. Moreover, when the feeding pump and circulation pump operate more than necessary, the temperature of the work fluid tends to rise, requiring additional energy for cooling the work fluid.

This disclosure has been made in view of such circumstances, and aims to provide an electric discharge machine and an electric discharge machining method that reduce energy consumption while preventing adverse effects on electric discharge machining.

### Solution to Problem

According to this disclosure, provided is an electric discharge machine, which includes a work tank for accommodating a workpiece; a jetting nozzle for jetting a work fluid toward a gap formed by the workpiece and a tool electrode; a dirty fluid tank for storing the work fluid discharged from the work tank; a filter for filtering the work fluid; a circulation pump for pressure-feeding the work fluid in the dirty fluid tank to the filter at a flow rate corresponding to an inverter frequency; a clean fluid tank for storing the work fluid filtered by the filter; a jetting pump for pressure-feeding the work fluid in the clean fluid tank to the jetting nozzle at a flow rate corresponding to an inverter frequency; a feeding pump for pressure-feeding the work fluid in the clean fluid tank to the work tank at a flow rate corresponding to an inverter frequency; and a pump controller for performing inverter control of the jetting pump, the feeding pump, and the circulation pump. The pump controller includes a jetting pump controller configured to set the inverter frequency of the jetting pump, and a feeding pump controller configured to acquire the flow rate of the inverter-controlled jetting pump and set the inverter frequency of the feeding pump based on the flow rate of the inverter-controlled jetting pump.

According to this disclosure, provided is an electric discharge machining method for an electric discharge machine, which includes: a work tank for accommodating a workpiece; a jetting nozzle for jetting a work fluid toward a gap formed by the workpiece and a tool electrode; a dirty fluid tank for storing the work fluid discharged from the work tank; a filter for filtering the work fluid; a circulation pump for pressure-feeding the work fluid in the dirty fluid tank to the filter at a flow rate corresponding to an inverter frequency; a clean fluid tank for storing the work fluid filtered by the filter; a jetting pump for pressure-feeding the work fluid in the clean fluid tank to the jetting nozzle at a flow rate corresponding to an inverter frequency; and a feeding pump for pressure-feeding the work fluid in the clean fluid tank to the work tank at a flow rate corresponding to an inverter frequency. The electric discharge machining method includes setting the inverter frequency of the jetting pump; acquiring the flow rate of the inverter-controlled jetting pump; and setting the inverter frequency of the feeding pump based on the flow rate of the inverter-controlled jetting pump.

### Effects

In the electric discharge machine or the electric discharge machining method of this disclosure, firstly, inverter control of the jetting pump is performed. Next, inverter control of the feeding pump is performed according to the flow rate of the jetting pump. As a result, the flow rate of the feeding pump can be properly adjusted within a range that does not adversely affect electric discharge machining. In this manner, comprehensive inverter control in consideration of the flow rates of other pumps is performed, which enables reduction of energy consumption while suppressing the occurrence of adverse effects on electric discharge machining.

### BRIEF DESCRIPTION OF THE DRAWINGS

Figure 1 is a schematic diagram of a wire electric discharge machine according to the present embodiment.
Figure 2 is a block diagram showing a pump controller according to the present embodiment.
Figure 3 is a flowchart of an electric discharge machining method according to the present embodiment.
Figure 4 is a graph showing the relationship between the flow rate of a jetting pump and the inverter frequency of a feeding pump and a circulation pump in the present embodiment.

### DESCRIPTION OF THE EMBODIMENTS

Hereinafter, embodiments of this disclosure will be described with reference to the drawings. Various modifications described below may be implemented in any combination.

The electric discharge machine of the present embodiment is a wire electric discharge machine 1 using a wire electrode E, which is a wire-shaped electrode. However, this disclosure may be applied to a sinker electric discharge machine using a formed electrode, which is an electrode having a shape complementary to the desired shape, or to a small-hole electric discharge machine using a pipe electrode, which is a pipe-shaped electrode.

Work fluid F used in the electric discharge machine is broadly divided into water-based work fluids, which have pure water as the main component, and oil-based work fluids, which have oil as the main component. In this disclosure, the work fluid F may be either a water-based work fluid or an oil-based work fluid. In the present embodiment, the work fluid F is a water-based work fluid.

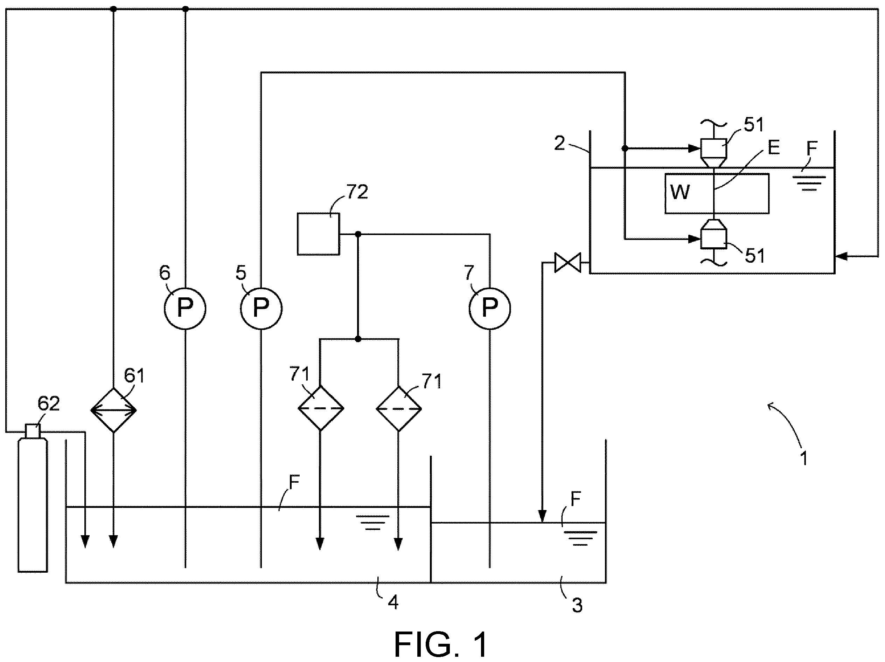

As shown in Figure 1, the wire electric discharge machine 1 of the present embodiment includes a work tank 2, a dirty fluid tank 3, a clean fluid tank 4, a jetting pump 5, jetting nozzles 51, a feeding pump 6, a cooler 61, a deionizer 62, a circulation pump 7, a filter 71, and a pressure sensor 72. The service tank including the dirty fluid tank 3 and the clean fluid tank 4 is installed adjacent to the main body of the wire electric discharge machine 1 including the work tank 2. In the present embodiment, the dirty fluid tank 3 and the clean fluid tank 4 are each composed of one tank, but they may be composed of multiple tanks.

The wire electric discharge machine 1 includes a pump controller 8 and a numerical controller 9 as controllers. The pump controller 8 and the numerical controller 9 may be integrally configured or separately configured. The controller may be configured by optionally combining hardware and software, for example, having a CPU, RAM, ROM, auxiliary storage device and input/output interface.

The work tank 2 accommodates a workpiece W, which is the target of electric discharge machining. Inside the work tank 2, an upper guide assembly and a lower guide assembly are provided across the workpiece W. The upper guide assembly and the lower guide assembly each accommodate a wire guide and a jetting nozzle 51. The pair of wire guides are provided above and below the workpiece W, positioning and guiding the wire electrode E. A pair of jetting nozzles 51 jet the work fluid F towards the gap formed between the workpiece W and the wire electrode E. The wire electrode E and the workpiece W are configured to be relatively movable, and during electric discharge machining, the workpiece W is arranged opposite to the wire electrode E with the gap formed. A power supply device (not shown) supplies a predetermined machining voltage to the gap through the wire electrode E and the workpiece W, generating a discharge in the gap. A part of the workpiece W is removed by the discharge energy accompanying the discharge, and the machining progresses.

The dirty fluid tank 3 stores the dirty work fluid F discharged from the work tank 2. The dirty work fluid F contains machining chips and sludge generated by electric discharge machining. In the present embodiment, the dirty fluid tank 3 is disposed below the work tank 2, and a drain pipeline including a drain valve is provided between the work tank 2 and the dirty fluid tank 3. When storing the work fluid F in the work tank 2, the drain valve is closed and storage is performed rapidly. During electric discharge machining, by opening the drain valve, the dirty work fluid F in the work tank 2 is allowed to freely fall and be discharged into the dirty fluid tank 3. In this manner, it is possible to reduce energy compared to pumping up and discharging the work fluid F in the work tank 2 by a pump, and also shorten the time required to completely discharge the work fluid F from the work tank 2. However, if necessary, instead of the drain pipeline, a discharge pipeline including a pump for pumping up the work fluid F in the work tank 2 may be provided. Alternatively, both the drain pipeline and the discharge pipeline may be provided, and the pipeline may be appropriately switched to collect the work fluid F in the dirty fluid tank 3.

The circulation pump 7 pressure-feeds the dirty work fluid F in the dirty fluid tank 3 to the filter 71. The filter 71 filters the dirty work fluid F, removing impurities such as machining chips and sludge from the work fluid F, and purifies it into clean work fluid F. In this manner, the work fluid F is reused. The clean work fluid F filtered by the filter 71 is sent to the clean fluid tank 4. That is, the circulation pump 7 supplies the work fluid F from the dirty fluid tank 3 to the clean fluid tank 4 through the filter 71. In the present embodiment, a pressure sensor 72 for measuring the pressure of the work fluid F applied to the filter 71 is provided. The pressure sensor 72 may be provided at a position where it may measure the pressure of the work fluid F in the filter 71, for example, it may be attached to a pipeline between the circulation pump 7 and the filter 71. Although two filters 71 are shown in Figure 1, one or more filters 71 may be provided.

The clean fluid tank 4 stores the clean work fluid F. The clean work fluid F in the clean fluid tank 4 is sent to the work tank 2, and electric discharge machining is performed in the clean work fluid F.

The jetting pump 5 pressure-feeds the clean work fluid F from the clean fluid tank 4 to the jetting nozzles 51. The flow rate of the jetting nozzles 51 may be changed by changing the inverter frequency of the jetting pump 5, as will be described later.

The feeding pump 6 pressure-feeds the clean work fluid F from the clean fluid tank 4 to the work tank 2. Moreover, the feeding pump 6 also supplies the clean work fluid F to the cooler 61 and the deionizer 62. The cooler 61 cools the work fluid F circulating inside it. The deionizer 62 contains ion exchange resin and adjusts specific resistance value of the work fluid F circulating inside. The deionizer 62 is provided when using a water-based work fluid as the work fluid F. The work fluid F sent to the cooler 61 by the feeding pump 6 is returned to the clean fluid tank 4 after its temperature, which has increased by electric discharge machining and operation of each pump, is lowered. The work fluid F sent to the deionizer 62 by the feeding pump 6 is returned to the clean fluid tank 4 after its resistance value, which has decreased by electric discharge machining, is adjusted. In this manner, the feeding pump 6 supplies the clean work fluid F to the work tank 2 while adjusting the temperature and specific resistance value of the work fluid F to a state suitable for electric discharge machining using the cooler 61 and the deionizer 62. Moreover, valves may be provided in the piping between the feeding pump 6 and the work tank 2, between the feeding pump 6 and the cooler 61, and between the feeding pump 6 and the deionizer 62, respectively, such that flow paths may be selectively switched.

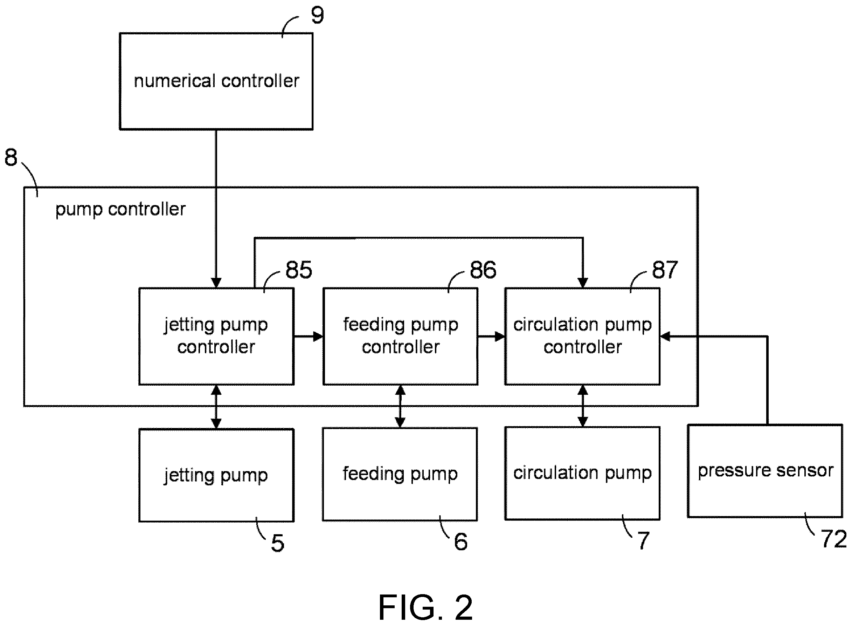

The pump controller 8 controls each pump. The pump controller 8, as shown in Figure 2, includes a jetting pump controller 85, a feeding pump controller 86, and a circulation pump controller 87. The jetting pump controller 85, the feeding pump controller 86, and the circulation pump controller 87 each perform inverter control on the jetting pump 5, the feeding pump 6, and the circulation pump 7, respectively. In the present embodiment, the jetting pump controller 85, the feeding pump controller 86, and the circulation pump controller 87 each include an inverter circuit such as a variable voltage variable frequency (VVVF) inverter circuit and appropriately adjust the output voltage value according to the set frequency.

In the present embodiment, the jetting pump controller 85 acquires machining conditions from the numerical controller 9 and sets the inverter frequency of the jetting pump 5 based on the machining conditions to perform inverter control on the jetting pump 5, and calculates flow rate of the jetting pump 5. The feeding pump controller 86 of the present embodiment acquires the flow rate of the jetting pump 5 from the jetting pump controller 85, sets the inverter frequency of the feeding pump 6 based on the flow rate of the jetting pump 5 to perform inverter control on the feeding pump 6, and calculates flow rate of the feeding pump 6. The circulation pump controller 87 of the present embodiment acquires the flow rate of the jetting pump 5 from the jetting pump controller 85, acquires the flow rate of the feeding pump 6 from the feeding pump controller 86, sets the inverter frequency of the circulation pump 7 based on the flow rate of the jetting pump 5 and the flow rate of the feeding pump 6 to performs inverter control on the circulation pump 7, and calculates the flow rate of the circulation pump 7.

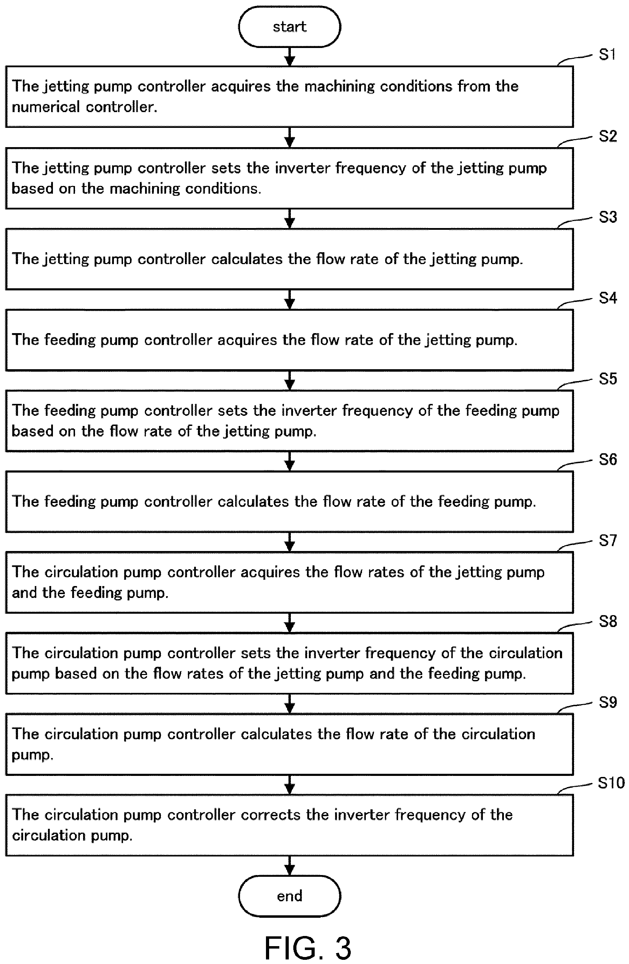

Referring to Figure 3, a detailed description of the inverter control of each pump will be provided. First, the jetting pump controller 85 acquires the machining conditions from the numerical controller 9 (S1) and sets the inverter frequency of the jetting pump 5 based on the machining conditions (S2). As a result, the flow rate of the jetting nozzles 51 changes to an appropriate value depending on the machining state. The machining conditions acquired from the numerical controller 9 may directly specify the inverter frequency or may be parameters of other machining conditions required to calculate the inverter frequency. The machining conditions necessary for calculating the inverter frequency may include on-time (i.e. pulse width), off-time, servo reference voltage, feed rate, voltage value, and the degree of contact between the jetting nozzles 51 and the workpiece W. Since machining conditions vary for each machining process, the flow rate of the jetting pump 5 changes for each machining process. The machining conditions may be changed during machining by adaptive control. For example, when the thickness of the workpiece W changes during machining, the machining conditions may be changed in response to the change in thickness. When the machining conditions change during machining, the jetting pump controller 85 controls such that the flow rate of the jetting pump 5 changes according to the change in machining conditions.

After the inverter control of the jetting pump 5 is performed as described above, the jetting pump controller 85 of the present embodiment acquires the inverter current value of the jetting pump 5. Thereby, the jetting pump controller 85 is able to grasp the inverter frequency and inverter current value of the jetting pump 5. From the inverter frequency and inverter current value, the work rate of the pump may be estimated. Thus, the jetting pump controller 85 calculates the work rate of the jetting pump 5, and hence, the flow rate of the jetting pump 5 (S3).

After the inverter control of the jetting pump 5 is performed, the feeding pump controller 86 acquires the flow rate of the jetting pump 5 from the jetting pump controller 85 (S4) and sets the inverter frequency of the feeding pump 6 based on the flow rate of the jetting pump 5 (S5). The applicant discovers that the appropriate flow rate of the feeding pump 6 may be estimated based on the flow rate of the jetting pump 5. The feeding pump controller 86 calculates the appropriate flow rate of the feeding pump 6 based on the flow rate of the jetting pump 5 and changes the inverter frequency of the feeding pump 6. In this manner, the feeding pump controller 86 controls to reduce the flow rate of the feeding pump 6 within a range that does not adversely affect electric discharge machining. Specifically, the feeding pump controller 86 decreases the inverter frequency of the feeding pump 6 when the flow rate of the jetting pump 5 is relatively high, and increases the inverter frequency of the feeding pump 6 when the flow rate of the jetting pump 5 is relatively low.

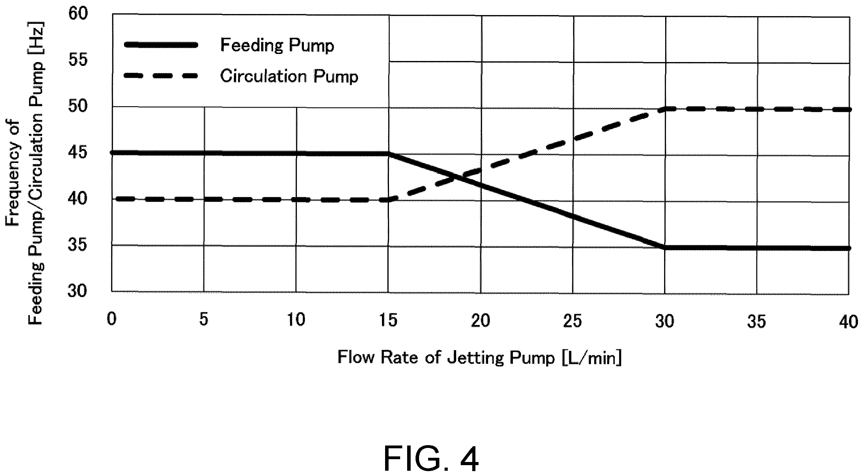

As shown in Figure 4, the feeding pump controller 86 of the present embodiment changes the inverter frequency of the feeding pump 6 in proportion to the flow rate of the jetting pump 5. However, in a case where there are upper and lower limits to the settable frequency for the feeding pump 6, the inverter frequency is set within the range of the upper and lower limits.

After the inverter control of the feeding pump 6 is performed as described above, the feeding pump controller 86 of the present embodiment acquires the inverter current value of the feeding pump 6. As a result, the feeding pump controller 86 is able to grasp the inverter frequency and inverter current value of the feeding pump 6. Thus, the feeding pump controller 86 calculates the work rate of the feeding pump 6 and, hence, the flow rate of the feeding pump 6 (S6).

In controlling the feeding pump 6, under specific conditions, other control methods may be preferentially performed instead of the above-described inverter control.

For example, for a predetermined period (e. g. 30 minutes) after the power of the wire electric discharge machine 1 is turned ON, control for maintaining the proper temperature of the work fluid F may be preferentially performed. In a case where the room temperature is high and it is necessary to lower the temperature of the work fluid F, during the predetermined period, the feeding pump controller 86 controls the feeding pump 6 to operate at the maximum flow rate and supplies a large amount of the work fluid F to the cooler 61 to lower the temperature of the work fluid F. In a case where the room temperature is low and it is necessary to raise the temperature of the work fluid F, during the predetermined period, the feeding pump controller 86 controls the feeding pump 6 to operate at the maximum flow rate while closing the pipeline to the cooler 61, thereby raising the temperature of the work fluid F. After the predetermined period has elapsed or when the work fluid F reaches the desired temperature, it is shifted the above-described inverter control.

For example, during standby operation, that is, while not performing electric discharge machining, the feeding pump controller 86 may control the inverter frequency of the feeding pump 6 to be low, thereby maintaining a constant specific resistance and temperature of the work fluid F while suppressing power consumption.

After the inverter control of the jetting pump 5 and the feeding pump 6 is performed, the circulation pump controller 87 acquires the flow rate of the jetting pump 5 from the jetting pump controller 85 and the flow rate of the feeding pump 6 from the feeding pump controller 86 (S7), calculates the sum of the flow rate of the jetting pump 5 and the flow rate of the feeding pump 6, and sets the inverter frequency of the circulation pump 7 based on this sum (S8). To maintain a constant or higher amount of the work fluid F in the clean fluid tank 4, the flow rate of the circulation pump 7 may be equal to or greater than the sum of the consumed work fluid F, that is, the sum of the flow rate of the jetting pump 5 and the flow rate of the feeding pump 6. In the present embodiment, the circulation pump controller 87 changes the inverter frequency of the circulation pump 7 such that the flow rate is slightly higher than the sum of the flow rate of the jetting pump 5 and the flow rate of the feeding pump 6. In this manner, the circulation pump controller 87 controls the flow rate of the circulation pump 7 to be smaller within a range that does not adversely affect electric discharge machining.

For example, the circulation pump controller 87 may set the inverter frequency of the circulation pump 7 such that the flow rate of the circulation pump 7 is about 10% higher than the sum of the flow rate of the jetting pump 5 and the flow rate of the feeding pump 6. However, in a case where there are upper and lower limits to the settable frequency for the circulation pump 7, the inverter frequency is set within the range of the upper and lower limits.

After the inverter control of the circulation pump 7 described above, a correction may be made to the inverter frequency of the circulation pump 7. The flow rate of the circulation pump 7 is affected not only by the inverter frequency of the circulation pump 7 but also by the condition of the filter 71. When the filter 71 is relatively new, the flow rate may become excessive even if the inverter frequency of the circulation pump 7 is the same as when the filter 71 is relatively old. Thus, by creating a relationship equation between the pressure and flow rate of the filter 71 in advance, the circulation pump controller 87 may calculate the actual flow rate of the circulation pump 7 based on the measured value of the pressure sensor 72 (S9). Then, when the actual flow rate of the circulation pump 7 exceeds the appropriate flow rate, the circulation pump controller 87 makes a correction to lower the inverter frequency of the circulation pump 7 within a range that does not fall below the sum of the flow rate of the jetting pump 5 and the flow rate of the feeding pump 6 (S10).

Based on the flow rate of the circulation pump 7, the replacement timing of the filter 71 may be determined. Impurities accumulate in the filter 71 with use, and the filtration efficiency deteriorates. By setting a threshold for the flow rate of the circulation pump 7 relative to the inverter frequency of the circulation pump controller 87 in advance, it may be determined that the filter 71 needs to be replaced when the flow rate of the circulation pump 7 falls below the threshold. The circulation pump controller 87 may issue a warning requesting the replacement of the filter 71 directly or through the numerical controller 9. In this manner, it is possible to prevent the operation from continuing in a state where the filtration efficiency of the filter 71 has deteriorated.

According to this disclosure, since a comprehensive inverter control is performed in consideration of the flow rates of other pumps, the electric discharge machining is less likely to be adverse effected compared to independent inverter control of each pump. The inverter control of the feeding pump 6 is performed according to the flow rate of the jetting pump 5, thereby preventing a shortage of the work fluid F in the work tank 2. The inverter control of the circulation pump 7 is performed according to the flow rate of the jetting pump 5 and the flow rate of the feeding pump 6, thereby preventing a shortage of the work fluid F in the clean fluid tank 4. In this manner, both energy consumption reduction and stable machining can be achieved. Preferably, since the inverter frequency of the circulation pump 7 is corrected based on the flow rate of the circulation pump 7, energy consumption can be reduced more effectively.

This disclosure is not limited to the configuration of the embodiments and may be variously modified or applied without departing from the technical concept of this disclosure. Hereinafter, a modification example of this disclosure will be illustrated.

In the present embodiment, the jetting pump controller 85 calculates the flow rate of the jetting pump 5 from the inverter frequency and inverter current value of the jetting pump 5. The feeding pump controller 86 calculates the flow rate of the feeding pump 6 from the inverter frequency and inverter current value of the feeding pump 6. The circulation pump controller 87 calculates the flow rate of the circulation pump 7 from the pressure detected by the pressure sensor 72 inside the filter 71, that is, the pressure of the work fluid F sent by the circulation pump 7. If a more accurate flow rate is desired, a flow meter for measuring the flow rate of each pump may be provided instead to measure the flow rate of the pumps directly. Alternatively, as a simpler method, the circulation pump controller 87 may calculate the flow rate of the circulation pump 7 from the inverter frequency and inverter current value of the circulation pump 7.

The means for measuring or calculating the flow rate may be freely combined, taking into account the required accuracy, cost, and the like. That is, in acquiring the flow rate of the jetting pump 5, the pump controller 8 may calculate and acquire the flow rate of the jetting pump 5 from the inverter frequency of the jetting pump 5 and the inverter current value of the jetting pump 5 or calculate and acquire the flow rate of the jetting pump 5 from the pressure of the work fluid sent by the jetting pump 5 measured by a pressure sensor, or may acquire the flow rate of the work fluid sent by the jetting pump 5 measured by a flow meter. In acquiring the flow rate of the feeding pump 6, the pump controller 8 may calculate and acquire the flow rate of the feeding pump 6 from the inverter frequency of the feeding pump 6 and the inverter current value of the feeding pump 6 or calculate and acquire the flow rate of the feeding pump 6 from the pressure of the work fluid sent by the feeding pump 6 measured by a pressure sensor, or acquire the flow rate of the work fluid sent by the feeding pump 6 measured by a flow meter. In acquiring the flow rate of the circulation pump 7, the pump controller 8 may calculate and acquire the flow rate of the circulation pump 7 from the inverter frequency of the circulation pump 7 and the inverter current value of the circulation pump 7 or calculate and acquire the flow rate of the circulation pump 7 from the pressure of the work fluid sent by the circulation pump 7 measured by the pressure sensor 72, or acquire the flow rate of the work fluid sent by the circulation pump 7 measured by a flow meter.

In the present embodiment, the circulation pump controller 87 sets the inverter frequency of the circulation pump 7 based on the sum of the flow rate of the jetting pump 5 and the flow rate of the feeding pump 6. Instead, after the inverter control of the jetting pump 5 is performed, the circulation pump controller 87 may set the inverter frequency of the circulation pump 7 based only on the flow rate of the jetting pump 5. That is, the circulation pump controller 87 may increase the inverter frequency of the circulation pump 7 when the flow rate of the jetting pump 5 is relatively large, and decrease the inverter frequency of the circulation pump 7 when the flow rate of the jetting pump 5 is relatively small. According to this modified example, although the accuracy is inferior, it is possible to more simply perform inverter control of the circulation pump 7.

## Claims

1. An electric discharge machine, comprising:
a work tank (2) for accommodating a workpiece (W);
a jetting nozzle (51) for jetting a work fluid (F) toward a gap formed by the workpiece (W) and a tool electrode;
a dirty fluid tank (3) for storing the work fluid (F) discharged from the work tank (2);
a filter (71) for filtering the work fluid (F);
a circulation pump (7) for pressure-feeding the work fluid (F) in the dirty fluid tank (3) to the filter (71) at a flow rate corresponding to an inverter frequency;
a clean fluid tank (4) for storing the work fluid (F) filtered by the filter (71);
a jetting pump (5) for pressure-feeding the work fluid (F) in the clean fluid tank (4) to the jetting nozzle (51) at a flow rate corresponding to an inverter frequency;
a feeding pump (6) for pressure-feeding the work fluid (F) in the clean fluid tank (4) to the work tank (2) at a flow rate corresponding to an inverter frequency;
a pump controller (8) for performing inverter control of the jetting pump (5), the feeding pump (6), and the circulation pump (7),
wherein the pump controller (8) comprises:
a jetting pump controller (85) configured to set the inverter frequency of the jetting pump (5); and
a feeding pump controller (86) configured to acquire the flow rate of the inverter-controlled jetting pump (5) and set the inverter frequency of the feeding pump (6) based on the flow rate of the inverter-controlled jetting pump (5).

2. The electric discharge machine according to claim 1,
wherein the feeding pump controller (86) is configured to set the inverter frequency of the feeding pump (6) such that the flow rate of the feeding pump (6) is relatively reduced when the flow rate of the jetting pump (5) is relatively high, and the flow rate of the feeding pump (6) is relatively increased when the flow rate of the jetting pump (5) is relatively low.

3. The electric discharge machine according to claim 1 or 2, further comprising: a circulation pump controller (87) configured to acquire the flow rate of the inverter-controlled jetting pump (5) and the flow rate of the inverter-controlled feeding pump (6), and set the inverter frequency of the circulation pump (7) based on a sum of the flow rate of the inverter-controlled jetting pump (5) and the flow rate of the inverter-controlled feeding pump (6).

4. The electric discharge machine according to claim 3, wherein the circulation pump controller (87) is configured to set the inverter frequency of the circulation pump (7) such that the flow rate of the circulation pump (7) is equal to or greater than the sum.

5. The electric discharge machine according to claim 4, wherein the circulation pump controller (87) is configured to acquire the flow rate of the inverter-controlled circulation pump (7), and when the flow rate of the circulation pump (7) exceeds an appropriate flow rate, reduce the inverter frequency of the circulation pump (7) within a range in which the flow rate of the circulation pump (7) is equal to or greater than the sum.

6. The electric discharge machine according to any one of claims 3 to 5, wherein the circulation pump controller (87) is configured to acquire the flow rate of the inverter-controlled circulation pump (7), and when the flow rate of the circulation pump (7) falls below a threshold value, determine that a replacement of the filter (71) is necessary.

7. The electric discharge machine according to any one of claims 1 to 6,
wherein the pump controller (8):
calculates and acquires the flow rate of the jetting pump (5) from the inverter frequency of the jetting pump (5) and an inverter current value of the jetting pump (5);
calculates and acquires the flow rate of the jetting pump (5) from a pressure of the work fluid (F) sent by the jetting pump (5), which is measured by a pressure sensor; or
acquires the flow rate of the work fluid (F) sent by the jetting pump (5), which is measured by a flow meter.

8. The electric discharge machine according to any one of claims 1 to 7,
wherein the pump controller (8):
calculates and acquires the flow rate of the feeding pump (6) from the inverter frequency of the feeding pump (6) and an inverter current value of the feeding pump (6);
calculates and acquires the flow rate of the feeding pump (6) from a pressure of the work fluid (F) sent by the feeding pump (6), which is measured by a pressure sensor; or
acquires the flow rate of the work fluid (F) sent by the feeding pump (6), which is measured by a flow meter.

9. The electric discharge machine according to any one of claims 1 to 8,
wherein the pump controller (8):
calculates and acquires the flow rate of the circulation pump (7) from the inverter frequency of the circulation pump (7) and an inverter current value of the circulation pump (7);
calculates and acquires the flow rate of the circulation pump (7) from a pressure of the work fluid (F) sent by the circulation pump (7), which is measured by a pressure sensor; or
acquires the flow rate of the work fluid (F) sent by the circulation pump (7), which is measured by a flow meter.

10. The electric discharge machine according to any one of claims 1 to 9, further comprising:
a cooler (61) for cooling the work fluid (F) and discharging it to the clean fluid tank (4),
wherein the feeding pump (6) pressure-feeds the work fluid (F) in the clean fluid tank (4) to the cooler (61).

11. The electric discharge machine according to any one of claims 1 to 10, further comprising:
a deionizer (62) for adjusting a specific resistance of the work fluid (F) and discharging it to the clean fluid tank (4),
wherein the feeding pump (6) pressure-feeds the work fluid (F) in the clean fluid tank (4) to the deionizer (62).

12. The electric discharge machine according to any one of claims 1 to 11,
wherein the tool electrode is a wire electrode (E).

13. An electric discharge machining method for an electric discharge machine, which comprises: a work tank (2) for accommodating a workpiece (W); a jetting nozzle (51) for jetting a work fluid (F) toward a gap formed by the workpiece (W) and a tool electrode; a dirty fluid tank (3) for storing the work fluid (F) discharged from the work tank (2); a filter (71) for filtering the work fluid (F); a circulation pump (7) for pressure-feeding the work fluid (F) in the dirty fluid tank (3) to the filter (71) at a flow rate corresponding to an inverter frequency; a clean fluid tank (4) for storing the work fluid (F) filtered by the filter (71); a jetting pump (5) for pressure-feeding the work fluid (F) in the clean fluid tank (4) to the jetting nozzle (51) at a flow rate corresponding to an inverter frequency; and a feeding pump (6) for pressure-feeding the work fluid (F) in the clean fluid tank (4) to the work tank (2) at a flow rate corresponding to an inverter frequency,
wherein the electric discharge machining method comprises: setting the inverter frequency of the jetting pump (5);
acquiring the flow rate of the inverter-controlled jetting pump (5); and
setting the inverter frequency of the feeding pump (6) based on the flow rate of the inverter-controlled jetting pump (5).

14. The electric discharge machining method according to claim 13, wherein the inverter frequency of the feeding pump (6) is set such that the flow rate of the feeding pump (6) is relatively reduced when the flow rate of the jetting pump (5) is relatively high, and the inverter frequency of the feeding pump (6) is set such that the flow rate of the feeding pump (6) is relatively increased when the flow rate of the jetting pump (5) is relatively low.

15. The electric discharge machining method according to claim 13 or claim 14,
wherein the flow rate of the inverter-controlled jetting pump (5) and the flow rate of the inverter-controlled feeding pump (6) are acquired, and
the inverter frequency of the circulation pump (7) is set based on a sum of the flow rate of the inverter-controlled jetting pump (5) and the flow rate of the inverter-controlled feeding pump (6).

16. The electric discharge machining method according to claim 15, wherein the inverter frequency of the circulation pump (7) is set such that the flow rate of the circulation pump (7) is equal to or greater than the sum.

17. The electric discharge machining method according to claim 16,
wherein the flow rate of the inverter-controlled circulation pump (7) is acquired, and
when the flow rate of the circulation pump (7) exceeds an appropriate flow rate, the inverter frequency of the circulation pump (7) is reduced within a range in which the flow rate of the circulation pump (7) is equal to or greater than the sum.

18. The electric discharge machining method according to any one of claims 15 to 17,
wherein the flow rate of the inverter-controlled circulation pump (7) is acquired, and
when the flow rate of the circulation pump (7) falls below a threshold value, it is determined that a placement of the filter (71) is necessary.
